# NEUE EUROPÄISCHE PATENTSCHRIFT

(11) **EP 2 877 511 B2**
(45) Veröffentlichungstag und Bekanntmachung des Hinweises auf die Entscheidung über den Einspruch: **27.03.2024**
(45) Hinweis auf die Patenterteilung: 14.09.2016
(21) Anmeldenummer: 13737252.0
(22) Anmeldetag: 16.07.2013
(51) Int. Cl.: C08G 18/18, C08G 18/40, C08G 18/48, C08G 18/63, C08G 18/66, C08G 18/79, C08K 3/32, C08K 5/00, C08K 5/521, C08K 5/523, C08K 5/524, C08K 5/5333, C08J 9/00

(54) **POLYURETHANSCHAUMSTOFFE ENTHALTEND PHOSPHORVERBINDUNGEN**
PHOSPHOROUS COMPOUNDS CONTAINING POLYURETHANE FOAMS
MOUSSES DE POLYURÉTHANE CONTENANT DES COMPOSÉS PHOSPHORÉS

(30) Priorität: 27.07.2012 EP 12178308
(43) Veröffentlichungstag der Anmeldung: 03.06.2015
(73) Patentinhaber: BASF SE, 67056 Ludwigshafen am Rhein (DE)
(72) Erfinder: OTERO MARTINEZ, Iran, 32351 Stemwede (DE); HADICK, Udo, 48163 Münster (DE); MEYER, Andre, 49448 Brockum (DE)
(74) Vertreter: BASF IP Association
(86) Internationale Anmeldenummer: PCT/EP2013/064999
(87) Internationale Veröffentlichungsnummer: WO 2014/016167

(56) Entgegenhaltungen:
- EP-A1- 0 603 597
- EP-A1- 0 913 415
- EP-A1- 1 127 908
- EP-A1- 2 292 677
- EP-A2- 0 377 868
- EP-A2- 0 377 891
- EP-A2- 0 837 093
- EP-B1- 0 635 527
- WO-A1-02/079340
- WO-A1-03/099919
- WO-A1-2004/081075
- WO-A1-2007/025886
- WO-A1-2007/025888
- WO-A1-2007/110179
- WO-A1-2009/017973
- WO-A2-2006/125740
- WO-A2-2011/003590
- CN-A- 1 912 001
- DE-A1- 2 233 723
- DE-A1- 2 710 901
- DE-A1- 2 800 072
- DE-A1- 2 842 582
- DE-A1- 4 030 515
- US-A- 3 580 869
- US-A- 5 830 926
- US-A1- 2005 009 939
- US-A1- 2007 208 097

## Beschreibung

Die vorliegende Erfindung betrifft Polyurethanintegralschaumstoffe mit einer Dichte von 0,15 bis 0,75 g/cm³, erhältlich durch Vermischen zu einer Reaktionsmischung von (a) Polyisocyanat, (b) polymeren Verbindungen mit gegenüber Isocyanaten reaktiven Gruppen, (c) Katalysatoren, enthaltend einbaubare Aminkatalysatoren, die neben der bzw. den gegenüber Isocyanaten reaktiven Gruppen eine oder mehrere tertiäte, aliphatische Aminogruppen aufweisen, wobei die mindestens eine tertiäre Aminogruppe zwei Reste, unabhängig voneinander ausgewählt aus Methyl- und Ethylrest, sowie einen weiteren organischen Rest trägt, (d) Phosphorsäureester, Polyphosphate, Phosphonsäureester und/oder Phosphorigsäureester, wobei der Anteil der Komponente (d), bezogen auf das Gesamtgewicht der Komponenten (a) bis (f), kleiner als 3 Gew.-% ist, (e) Treibmittel, enthaltend Wasser, und gegebenenfalls (f) Kettenverlängerungs- und oder Vernetzungsmittel und (h) Hilfsmittel und/oder Zusatzstoffe, wobei man die Reaktionsmischung in eine Form gibt und in dieser zum Polyurethanintegralschaumstoff aushärtet, und das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25 beträgt, wobei neben den einbaubaren Aminkatalysatoren als Katalysatoren (c) alleine organische Metallkatalysatoren enthalten sein können, der Phosphorsäureester der allgemeinen Formel

(R¹-O)₃-P=O

entspricht, wobei die drei Reste R¹ unabhängig voneinander für organische Reste stehen, die eine oder mehrere Phenylgruppen, eine oder mehrere Phosphorsäuregruppen oder deren Ester und/oder ein oder mehrere Atome, ausgewählt aus der Gruppe, bestehend aus Stickstoff, Sauerstoff, Fluor, Chlor und Brom, enthalten, das Polyphosphat der allgemeinen Formel

-[P(O)(O⁻R'⁺)-O]ₙ-

entspricht, wobei n für ganze Zahlen von 2 bis 20 steht, R'⁺ für Alkalimetallkationen oder Ammoniumkationen steht, der Phosphonsäureester der allgemeinen Formel

(R³)(R²-O)₂-P=O

entspricht, wobei die Reste R² unabhängig voneinander für organische Reste stehen, die ein oder mehrere Atome, ausgewählt aus der Gruppe, bestehend aus Stickstoff, Sauerstoff, Fluor, Chlor und Brom, enthalten und der Rest R³ entweder für Wasserstoff oder aromatische, aliphatische oder cycloaliphatische Reste mit 1 bis 10 Kohlenstoffatomen, der weitere Heteroatome enthalten kann, steht und der Phosphorigsäureester der allgemeinen Formel

(R⁴-O)₃-P

entspricht, wobei die Reste R⁴ unabhängig voneinander für organische Reste stehen, die ein oder mehrere Atome, ausgewählt aus der Gruppe, bestehend aus Stickstoff, Sauerstoff, Fluor, Chlor und Brom, enthalten. Weiter betrifft die Erfindung ein Verfahren zur Herstellung solcher Polyurethanintegralschaumstoffe und deren Verwendung im Automobilinnenraum.

Polyurethane zeichnen sich durch vielfältige Einsatzmöglichkeiten aus. Insbesondere im Automobilbau werden diese häufig eingesetzt, beispielsweise in der Automobilaußenverkleidung als Spoiler, Dachelemente, Federelemente sowie in der Automobilinnenverkleidung als Dachverkleidungen, Teppichhinterschäumungen, Türverkleidungen, Lenkräder, Schaltknöpfe und Sitzpolster. An Polyurethane, die im Automobilbereich, insbesondere im Automobilinnenraum eingesetzt werden, werden hohe Anforderungen an die mechanischen Eigenschaften sowie an die Alterungsbeständigkeit gesetzt. So ist es erforderlich, dass über die Lebensdauer eines Automobils wichtige Eigenschaften, wie Geräuschdämmung, Polstereigenschaften oder Dämpfungseigenschaften eines mechanischen Aufpralls, beispielsweise im Fall eines Unfalls, erhalten bleiben.

Dabei herrschen im Automobil extreme Bedingungen, die die Alterung des Polyurethans beschleunigen. So können Temperaturen im Bereich von minus 10 °C und weniger sowie von mehr als 60 °C, bei Sonneneinstrahlung auch mehr als 100 °C erreicht werden. Die Luftfeuchtigkeit kann dabei bis zu 100 % relative Feuchte betragen. Dies trifft insbesondere zu für Polyurethanschäume, die im Vergleich zum kompakten Polyurethan eine deutlich vergrößerte Oberfläche aufweisen.

Neben diesen extremen Klimabedingungen ist es auch erforderlich, dass im Automobilinnenraum eingesetzte Polyurethane möglichst geringe Emissionen flüchtiger Verbindungen verursachen. Diese rühren meist vom Einsatz flüchtiger Aminkatalysatoren. Um Emissionen zu reduzieren werden diese flüchtigen Aminkatalysatoren ganz oder teilweise durch einbaubare Katalysatoren ersetzt. Diese Verbindungen katalysieren die Polyurethanreaktion, verfügen aber gleichzeitig auch über gegenüber Isocyanatgruppen reaktive Gruppen, wodurch ein fester Einbau der Katalysatoren in das Polyurethan erfolgt. Diese einbaubaren Katalysatoren führen jedoch meist zu einer Verschlechterung der mechanischen Eigenschaften des erhaltenen Polyurethans, insbesondere nach Hitzelagerung oder Feucht-Wärmelagerung, das heißt bei Bedingungen, wie sie im Automobilinnenraum häufig erreicht werden.

Der Einsatz von Flammschutzmitteln in Polyurethanen ist bekannt. So beschreibt WO 2009065826 den Einsatz von Alkylphosphaten zur Herstellung von Polyurethanintegralschaumstoffen, unter anderem zur Verwendung als Lenkräder, beschrieben. Der Einsatz von einbaubaren Katalysatoren in Kombination mit Phosphorsäureestern ist in WO 2009065826 nicht beschrieben.

Weiter beschreibt EP 2374843 den Einsatz von Phosphorsäureestern bei der Verbesserung der Alterungsbeständigkeit bei Kabelummantelungen aus Polyurethan. Als aktive Substanz werden dabei Zink- und Borverbindungen genannt.

Aufgabe der Vorliegenden Erfindung war eine Verbesserung der Alterungseigenschaften von Polyurethanintegralschaumstoffen, die einbaubare Katalysatoren enthalten, insbesondere eine Verbesserung der Hitzealterungseigenschaften und der Feucht-Wärme-Alterungseigenschaften ohne eine wesentliche Verschlechterung der allgemeinen mechanischen Eigenschaften nach der Alterung.

Die Aufgabe wird gelöst durch Polyurethanintegralschaumstoffe gemäß Anspruch 1.

Bei den erfindungsgemäßen Polyurethanen handelt es sich um Integralschaumstoffe, insbesondere um solche gemäß DIN 7726 mit einer Randzone, die bedingt durch den Formgebungsprozess eine höhere Dichte als der Kern aufweist.

Die zur Herstellung der erfindungsgemäßen Polyurethanintegralschaumstoffe verwendeten organischen und/oder modifizierten Polyisocyanate (a) umfassen die aus dem Stand der Technik bekannten aliphatischen, cycloa liphatischen und aromatischen zwei- oder mehrwertigen Isocyanate (Bestandteil a-1) sowie beliebige Mischungen daraus. Beispiele sind 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 20 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen auf Basis von Polyestern, beispielsweise ausgehend von Adipinsäure, oder Polyethern, beispielsweise ausgehend von Ethylenoxid und/oder Propylenoxid, verwendet.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole (a-2) die unter b) beschriebenen hochmolekularen Verbindungen mit gegenüber Isocyanate reaktiven Wasserstoffatomen eingesetzt. Besonders bevorzugt werden als Polyole (a-2) Polyester eingesetzt.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter c) beschrieben. Besonders bevorzugt werden als Kettenverlängerer Monoethylenglycol und 1,4-Butandiol eingesetzt.

Höhermolekulare Verbindungen b) mit mindestens zwei gegen Isocyanatgruppen reaktiven Wasserstoffatomen können beispielsweise Polyetherole oder Polyesterole sein.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen vorzugsweise eine Funktionalität von 2 bis 3 und Molekulargewichte von 1.000 bis 8.000, vorzugsweise von 2.000 bis 6.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. · -Caprolacton oder Hydroxycarbonsäuren, z.B. · -Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2 polykondensiert.

Die erhaltenen Polyesterpolyole besitzen vorzugsweise eine Funktionalität von 2 bis 4, insbesondere von 2 bis 3, und ein Molekulargewicht von 480 bis 3000, vorzugsweise 1000 bis 3000 g/mol.

Als höhermolekulare Verbindungen b) mit mindestens zwei gegenüber Isocyanat reaktiven Wasserstoffatomen eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im allgemeinen durch Übertragung der Radikale von wachsenden Polymerketten auf Polyesterol oder Polyetherole. Das Polymer-Polyol enthält neben dem Propfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, Acrylnitril und Styrol, insbesondere bevorzugt ausschließlich Styrol verwendet. Die Monomere werden gegebenenfalls in Gegenwart weiterer Monomere, eines Makromers, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist in der höhermolekularen Verbindung b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Besonders bevorzugt ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Katalysatoren c) beschleunigen die Reaktion der Polyole (b) und gegebenenfalls Kettenverlängerungs- und Vernetzungsmittel (d) sowie chemischem Treibmittel (e) mit den organischen, gegebenenfalls modifizierten Polyisocyanaten (a) stark. Dabei enthalten die Katalysatoren (c) einbaubare Aminkatalysatoren. Diese weisen mindestens eine, vorzugsweise 1 bis 8 und besonders bevorzugt 1 bis 2 gegenüber Isocyanaten reaktive Gruppen auf, vorzugsweise OH-, NH- oder NH₂-Gruppen. Einbaubare Aminkatalysatoren werden meist zur Herstellung emissionsarmer Polyurethanschaumstoffe eingesetzt, die insbesondere im Automobilinnenbereich eingesetzt werden. Solche Katalysatoren sind bekannt und beispielsweise in EP1888664 beschrieben. Diese sind Verbindungen, die neben der bzw. den gegenüber Isocyanaten reaktiven Gruppen eine oder mehrere tertiäre Aminogruppen aufweisen. Dabei tragen die tertiären Aminogruppen zwei Reste, unabhängig voneinander ausgewählt aus Methyl- und Ethylrest sowie einen weiteren organischen Rest. Beispiele für einsetzbare einbaubare Katalysatoren sind Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylaminopropyl)-N-isopropanolamin, Bis-(dimethylaminopropyl)-2-hydroxyethyl-amin, N,N,N-Trimethyl-N-(3 aminopropyl)-bis(aminoethylether), 3-Dimethylaminoisopropyl-diisopropanolamin oder Mischungen davon.

Neben den einbaubaren Aminkatalysatoren können alleine organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon als Katalysatoren (c) enthalten sein. Handelt es sich bei der Komponente (b) um einen Ester, werden vorzugsweise ausschließlich Aminkatalysatoren eingesetzt. In einer besonders bevorzugten Ausführungsform werden ausschließlich einbaubare Katalysatoren als Katalysatoren (c) eingesetzt.

Komponente (d) enthält Phosphorsäureester, Polyphosphate, Phosphonsäureester und/oder Phosphorigsäureester. Diese weisen vorzugsweise ein Molekulargewicht von mindestens 350 g/mol auf. Ebenfalls bevorzugt sind Phosphorsäureester, Phosphonsäureester und/oder Phosphorigsäureester, die mindestens eine gegenüber Isocyanaten reaktive Gruppe, beispielsweise OH-Gruppe, aufweisen.

Dabei werden als Phosphorsäureester solche Ester der Phosphorsäure eingesetzt, die der allgemeinen Formel

(R¹-O)₃-P=O

entsprechen, wobei die drei Reste R¹ unabhängig voneinander für organische Reste stehen, die eine oder mehrere Phenylgruppen, eine oder mehrere Phosphorsäuregruppen oder deren Ester und/oder ein oder mehrere Atome, ausgewählt aus der Gruppe bestehend aus Stickstoff, Sauerstoff, Fluor, Chlor und Brom enthalten. Dabei enthalten die Reste R¹ jeweils unabhängig voneinander vorzugsweise 1 bis 20, besonders bevorzugt 2 bis 10 und insbesondere 2 bis 5 Kohlenstoffatome und vorzugsweise Verzweigungen aufweisen, vorzugsweise sind diese Reste aliphatisch. Bevorzugt sind Reste, die Chloratome oder Sauerstoffatome, beispielsweise als OH-Endgruppen, aufweisen. Beispiele für die Reste R1 sind Ethylenchlorid, Propylenchlorid, Butylenchlorid, Ethylenoxyd, Propylenoxyd, Butylenoxyd uns Polyethyalkylenoxide mit vorzugsweise 2 bis 10 Widerholungseinheiten.

Vorzugsweise enthalten die erfindungsgemäßen Phosphorsäureester mindestens zwei, vorzugsweise zwei bis 50, besonders bevorzugt 2 bis 20 Phosphatgruppen in einem Molekül, die durch mehrwertige Reste, insbesondere durch zweiwertige Reste -R"- verbunden sind. Dabei steht R" für einen organischen Rest mit 1 bis 20, vorzugsweise 2 bis 10 und insbesondere 2 bis 5 Kohlenstoffatomen, die linear oder verzweigt, bevorzugt verzweigt, sein können und gegebenenfalls ein oder mehrere Atome, ausgewählt aus der Gruppe bestehend aus Stickstoff, Sauerstoff, Fluor, Chlor und Brom enthalten. Dies Phosphorsäureester gemäß Erfindung umfassen beispielsweise 2,2-bis(chloromethyl)trimethylene-bis(bis(2-chloroethyl)phosphat). Tris(2-butoxyethyl)phosphat, Tris(1,3-dichlor-2-isopropyl)phosphat Tris(2-chlorisopropyl)phosphat und oligomere Alkylphosphate mit Ethylenoxydbrücken, wie Fyrol^{®} PNX der Firma ICL Industrial Products.

Erfindungsgemäße Polyphosphate sind Verbindungen der allgemeinen Formel

-[P(O)(O⁻R'⁺)-O]ₙ-,

wobei n für ganze Zahlen von 2 bis 10000 steht und R'⁺ für Alkalimetallkationen oder Ammoniumkationen steht. Als Endgruppen können beliebige Strukturen dienen, vorzugsweise Strukturen der allgemeinen Formel

-O-P(O)(O⁻R'⁺)₂,

wobei R'⁺ die oben angegebene Bedeutung hat. Beispielsweise kann als Polyphosphat Ammoniumpolyphosphat eingesetzt werden.

Erfindungsgemäße der Phosphonsäureester sind Verbindungen, die der allgemeinen Formel

(R³)(R²-O)₂-P=O

entsprechen, wobei die Reste R² unabhängig voneinander für organische Reste stehen, die ein oder mehrere Atome, ausgewählt aus der Gruppe, bestehend aus Stickstoff, Sauerstoff, Fluor, Chlor und Brom, enthalten und vorzugsweise Verzweigungen aufweisen und der Rest R³ entweder für Wasserstoff oder aromatische, aliphatische oder cycloaliphatische Reste mit 1 bis 10, vorzugsweise 1 bis 5 und insbesondere 1 bis 3 Kohlenstoffatomen steht, die gegebenenfalls ebenfalls Heteroatome enthalten.

Dabei enthalten die Reste R² jeweils unabhängig voneinander vorzugsweise 1 bis 20, besonders bevorzugt 2 bis 10 und insbesondere 2 bis 5 Kohlenstoffatome. Bevorzugt sind Reste, die Chloratome oder Sauerstoffatome, beispielsweise als OH-Endgruppen, aufweisen. Beispiele für die Reste R² sind Ethylenchlorid, Propylenchlorid, Butylenchlorid, Ethylenoxyd, Propylenoxyd, Butylenoxyd uns Polyethyalkylenoxide mit vorzugsweise 2 bis 10 Widerholungseinheiten. Ein Beispiel für einen erfindungsgemäßen Phosphonsäureester ist Methylphosphonatdi(diethylenglycol)ester.

Als Phosphorigsäureester werden Verbindungen der allgemeinen Formel

(R⁴-O)₃-P

eingesetzt, wobei die Reste R⁴ unabhängig voneinander für organische Reste stehen, die ein oder mehrere Atome, ausgewählt aus der Gruppe, bestehend aus Stickstoff, Sauerstoff, Fluor, Chlor und Brom, enthalten. Bevorzugt sind Reste, die Chloratome oder Sauerstoffatome, beispielsweise als OH-Endgruppen, aufweisen. Dabei enthalten die Reste R⁴ jeweils unabhängig voneinander vorzugsweise 1 bis 20, besonders bevorzugt 2 bis 10 und insbesondere 2 bis 5 Kohlenstoffatome. Bevorzugt sind Reste, die Chloratome oder Sauerstoffatome, beispielsweise als OH-Endgruppen, aufweisen. Insbesondere enthalten Phosphite OH-Endgruppen. Beispiele für die Reste R⁴ sind Ethylenchlorid, Propylenchlorid, Butylenchlorid, Ethylenoxyd, Propylenoxyd, Butylenoxyd uns Polyethyalkylenoxide mit vorzugsweise 2 bis 10 Widerholungseinheiten. Beispielsweise wird als Phosphorigsäureester Tris(dipropylenglycol)phosphit eingesetzt.

Besonders bevorzugte Komponenten (d) sind Phosphorsäureester, Phosphonsäureester und/oder Phosphorigsäureester, weiter bevorzugt Verbindungen, die mindestens zwei Phosphatgruppen im Molekül aufweisen. Beispiele sind 2,2-bis(chlorömethyl)trimethylene-bis(bis(2-chloroethyl)phosphat), Ammoniumpolyphosphat, und Polyalkylphosphat mit Ethylenoxydbrücken. Weiter bevorzugt ist Tris(1,3-dichlor-2-isopropyl)phosphat, Tris(2-chlorisopropyl)phosphat, Tris(2-butoxyethyl)phosphat, oligomere Alkylphosphate mit Ethylenoxydbrücken und Methylphosphonatdi(diethylenglycol)ester. Ganz besonders bevorzugt sind sind 2,2-bis(chloromethyl)trimethylene-bis(bis, (2-chloroethyl)phosphat), Methylphosphonatdi(diethylenglycol)ester, Tris(1,3-dichlor-2-isopropyl)phosphat, oligomere Alkylphosphate mit Ethylenoxydbrücken und Ammoniumpolyphosphat. Insbesondere bevorzugt sind 2,2-bis(chloromethyl)trimethylene-bis(bis, (2-chloroethyl)phosphat) und oligomere Alkylphosphate mit Ethylenoxydbrücken. Diese Verbindungen sind kommerziell erhältlich.

Dabei ist der Anteil der Komponente (d), bezogen auf das Gesamtgewicht der Komponenten (a) bis (f), kleiner als 3 Gew.-%, besonders bevorzugt 0,05 bis 2%, weiter bevorzugt 0,1 bis 1,5% und insbesondere 0,15 bis 1,0%, jeweils bezogen auf das Gesamtgewicht der Komponenten (a) bis (f). Zur Verbesserung der Hitzelagerung genügt bereits ein Anteil der Komponente (d), bezogen auf das Gesamtgewicht der Komponenten (a) bis (f), von vorzugsweise 0,1 bis 0,4% und besonders bevorzugt 0,15 bis 0,3%, jeweils bezogen auf das Gesamtgewicht der Komponenten (a) bis (f). Besonders bevorzugt enthalten die erfindungsgemäßen Polyurethanintegralschaumstoffe weniger als 5 %, weiter bevorzugt weniger als 2 %, noch weiter bevorzugt weniger als 1 % und insbesondere keine weiteren Substanzen, die üblicherweise als Flammschutzmittel in Polyurethanen eingesetzt werden.

Ferner sind bei der Herstellung von Polyurethanintegralschaumstoffen Treibmittel (e) zugegen. Diese Treibmittel (e) enthalten Wasser. Als Treibmittel (e) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, insbesondere 0,4 bis 1 Gew.%, bezogen auf das Gesamtgewicht der Komponenten (a) bis (g).

Als Kettenverlängerungsmittel und/oder Vernetzungsmittel (f) werden Substanzen mit einem Molekulargewicht von vorzugsweise kleiner 500 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kochlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (c) Monoethylenglycol, 1,4-Butandiol, Glycerin oder Mischungen davon und insbesondere Monoethylenglycol oder Mischungen, enthaltend Monoethylenglycol, eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (c), zum Einsatz.

Der Reaktionsmischung zur Herstellung der Polyurethanschäume können gegebenenfalls auch noch Hilfsmittel und/oder Zusatzstoffe (g) zugegeben werden. Genannt seien beispielsweise oberflächenaktive Substanzen, Schaumstabilisatoren, Zellregler, Trennmittel, Gummivulkanistionshiffsmittel, Füllstoffe, Farbstoffe, Pigmente, Hydrolyseschutzmittel, geruchsabsorbierende Substanzen und fungistatische und/oder bakteriostatisch wirkende Substanzen. Diese sind bekannt und werden üblicherweise bei der Herstellung von Polyurethanschaumstoffen eingesetzt.

Weiter ist Gegenstand der Erfindung ein Verfahren zur Herstellung der erfindungsgemäßen Polyurethanintegralschaumstoffe, bei dem die Komponenten (a) bis (d) und gegebenenfalls (e) bis (g) zu einer Reaktionsmischung vermischt werden, welche dann zum Polyurethanintegralschaumstoff ausreagiert wird. Dabei werden die in solchen Mengen miteinander vermischt, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt.

Die erfindungsgemäß bevorzugten Polyurethanintegralschaumstoffe werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoff-handbuch", Band 7, Polyurethane, 3. Auflage, 1993, Kapitel 7.

Dazu werden die Ausgangskomponenten vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (g) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper aus Integralschaumstoffen eine Dichte von von 0,15 bis 0,75 g/cm³ und insbesondere von 0,25 bis 0,70 g/cm³ aufweisen. Die Verdichtungsgrade zur Herstellung der erfindungsgemäßen Polyurethanintegralschaumstoffe liegen im Bereich von 1,1 bis 8,5, vorzugsweise von 2,1 bis 7,0.

Die erfindungsgemäßen Polyurethanintegralschaumstoffe werden vorzugsweise im Automobilinnenraum eingesetzt. Vorzugsweise handelt es sich dabei um Automobilinnenraumteile, wie Lenkräder, Armaturenbretter, Türverkleidungen, Kopfstützen oder Schaltknäufe. Dabei zeigen erfindungsgemäße Polyurethanintegralschaumstoffe ein vorzügliches Alterungsverhalten, insbesondere bei der Hitzelagerung über 7 Tage bei 140 °C oder der Feucht-Wärmealterung über 3 Zyklen von 5 Stunden im Autoklaven bei 120 °C und 100 % relativer Feuchte. Dabei ist insbesondere die Zugfestigkeit als auch die maximale Dehnung verbessert. Die Bestimmung der Feucht-Wärmelagerung sowie der Hitzelagerung erfolgte gemäß DIN EN ISO 2440.

Im Folgenden wird die Erfindung anhand von Beispielen verdeutlicht.

Ausgangsmaterialien:

| | |
|---|---|
| Polyol A: | Polyetherol mit einer OH-Zahl 35 mgKOH/g und einer Funktionalität von 2.7 auf Basis von Ethylenoxyd und Propylenoxyd, einem Propylenoxydgehalt von 84% und einem Ethylenoxydgehalt von 14 % |
| Polyol B: | Graftpolyol mit 45% Feststoffgehalt (Styrolacrylnitril) in Polyol A als Trägerpolyol |
| MEG: | Monoethylenglykol |

| | |
|---|---|
| Isopur SA-21050: | Schwarzpaste der Firma ISL-Chemie |
| Polycat 15: | Katalysator der Firma Air Products |
| Jeffcat ZF-10: | Katalysator der Firma Huntsman |

**Phosphorverbindungen**

| | |
|---|---|
| P1 : | Tris(1,3-dichlor-2-isopropyl)phosphat |
| P2: | oligomeres Alkylphosphat mit Ethylenoxydbrücken |
| P3: | Methylphosphonatdi(diethylenglycol)ester |
| P4: | Exolit^{®} AP422 - Ammoniumpolyphosphat der Firma Clariant |
| P5: | Isopropyliertes Triarylphosphat |
| P6: | Tris (dipropyleneglycol) phosphit |
| P7: | Tris(2-butoxyethyl)phosphat |
| P8: | TCPP Tris(2-chlorisopropyl)phosphat |
| P9: | Tributylphosphat (Vergleich) |
| P10: | Tributylphosphit (Vergleich) |
| P11: | TNPP - Trisnonylphenyl phosphite (Vergleich) |
| P12: | Disflamoll^{®} TOF - Tris(2-ethylhexyl)phosphat (Vergleich) aliphatisches Phosphat der Firma Lanxess |

| | |
|---|---|
| Isocyanat: | Carbodiimid-modifiziertes 4,4'-MDI mit einem NCO-Gehalt von 27.8 |

Die Mischung A wurde durch Abmischung von folgenden Komponenten vorbereitet:

| | |
|---|---|
| 79.9 | TI. Polyol A |
| 4.8 | TI. Polyol B |
| 8.1 | TI. MEG |
| 5.0 | TI. Isopur SA-21050 |
| 0.6 | TI. Wasser |
| 0.8 | TI. Polycat 15 |
| 0.8 | TI. Jeffcat ZF-10 |
| 0.25-2 | Teile Phosphorverbindungen (s. Tabelle) |

Die Mischung A und die Isocyanat-Komponente wurden bei einem Isocyanatindex von 102 miteinander vermischt und in eine geschlossene Form gegeben, so dass Formteile mit einer mittleren Dichte von 380 g/L erhalten wurden.

Zur Bestimmung der Messwerte für die mechanischen Eigenschaften wurde gemäß der folgenden Normen vorgegangen.

| Eigenschaft | Dimension | DIN-Norm |
|---|---|---|
| Härte | Shore A | 53505 |
| Zugfestigkeit | MPa | 1798 |
| Dehnung | % | 1798 |
| Dichte | g/mm³ | 845 |

Zur Durchführung der Hitzelagerung und die Feuchtwärmealterung wurde gemäß der Norm DIN EN ISO 2440 vorgegangen.

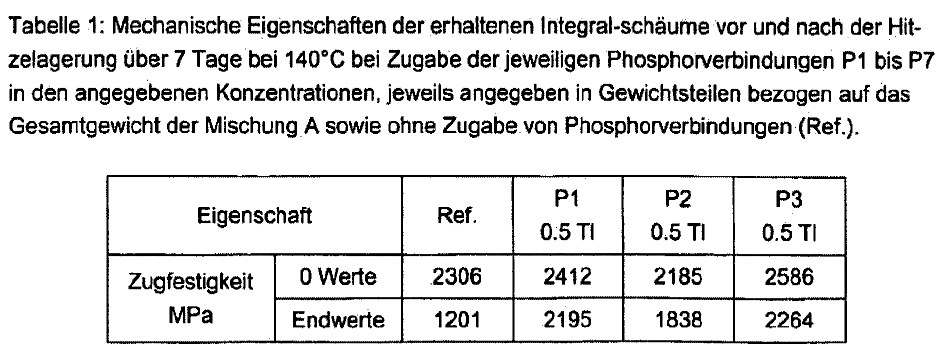

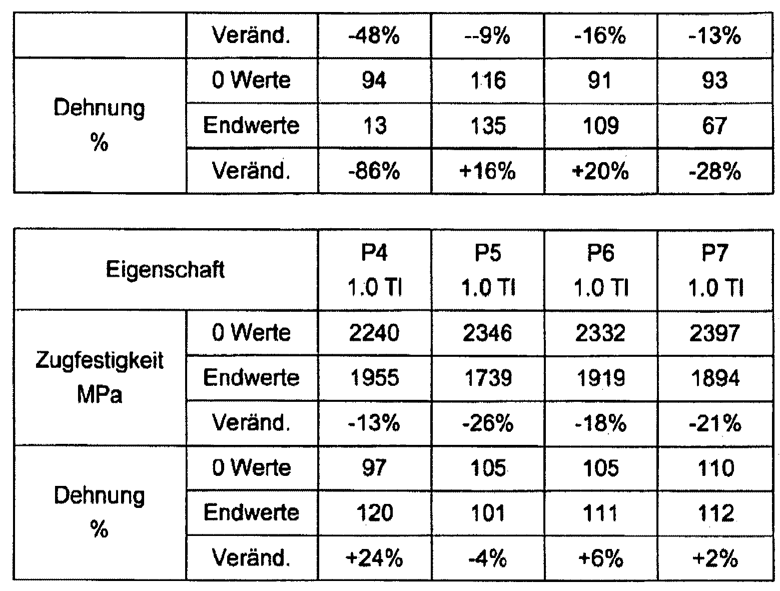

**Tabelle 2: Mechanische Eigenschaften der erhaltenen Integralschäume vor und nach der Hitzelagerung über 7 Tage bei 140°C bei Zugabe der jeweiligen Phosphorverbindungen P8 bis P12 in den angegebenen Konzentrationen, jeweils angegeben in Gewichtsteilen bezogen auf das Gesamtgewicht der Mischung A.**

| Eigenschaft | | P8 | P8 | P9 | P10 | P11 | P12 |
|---|---|---|---|---|---|---|---|
| | | 0.5 TI | 1.0 TI | 1.0 TI | 1.0 TI | 1.0 TI | 1.0 TI |
| Zugfestigkeit MPa | 0 Werte | 2266 | 2272 | 2260 | 2297 | 2218 | 2222 |
| | Endwer- | 1131 | 1681 | 1373 | 1256 | 1338 | 1217 |
| | Veränd. | -51% | -26% | -39% | -45% | -40% | -45% |
| Dehnung % | 0 Werte | 105 | 101 | 98 | 100 | 93 | 92 |
| | Endwer- | 29 | 96 | 59 | 47 | 68 | 41 |
| | Veränd. | -73% | -5% | -40% | -53% | -27% | -55% |

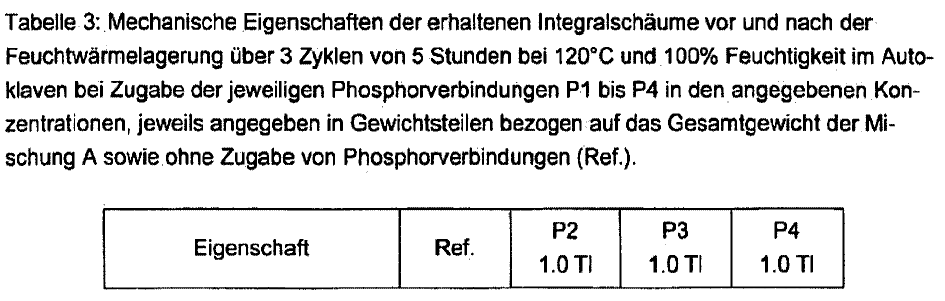

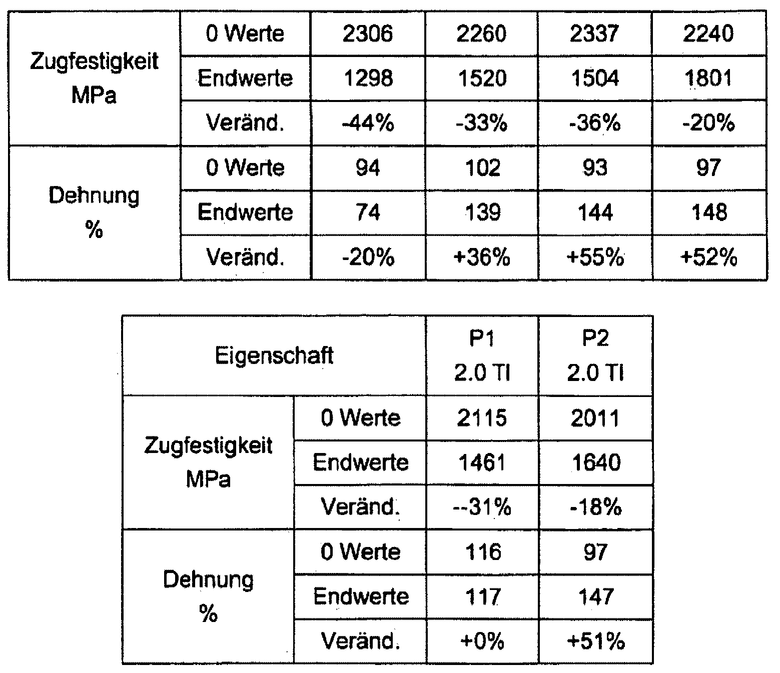

**Tabelle 4: Mechanische Eigenschaften der erhaltenen Integralschäume vor und nach der Feuchtwärmelagerung über 3 Zyklen von 5 Stunden bei 120°C und 100% Feuchtigkeit im Autoklaven bei Zugabe der jeweiligen Phosphorverbindungen P9 bis P12 in den angegebenen Konzentrationen, jeweils angegeben in Gewichtsteilen bezogen auf das Gesamtgewicht der Mischung A..**

| Eigenschaft | | P9 | P10 | P11 | P12 |
|---|---|---|---|---|---|
| | | 1.0 TI | 1.0 TI | 1.0 TI | 1.0 TI |
| Zugfestigkeit MPa | 0 Werte | 2260 | 2297 | 2218 | 2222 |
| | Endwerte | 1374 | 1341 | 1301 | 1084 |
| | Veränd. | -39% | -42% | -41% | -51% |
| Dehnung % | 0 Werte | 98 | 100 | 93 | 92 |
| | Endwerte | 117 | 123 | 109 | 92 |
| | Veränd. | +19% | +23% | +17% | 0% |

Schließlich wurden ausgehend von den Mischungen A und dem Isocyanat unter Einsatz von jeweils 0,5 Gewichtsteilen der Phosphorverbindungen P1, P2 und P3, bezogen auf das Gesamtgewicht der Mischung A, sowie als Referenz ohne Einsatz von Phosphorverbindung Lenkräder hergestellt und 7 Tage bei 140 °C gealtert. Dabei ist das Polyurethan des Lenkrads ohne Phosphorverbindung rissig und bröselt zu Teil ab, während das Polyurethan der erfindungsgemäß hergestellten Lenkräder optisch unverändert ist.

## Patentansprüche

1. Polyurethanintegralschaumstoffe mit einer Dichte von 0,15 bis 0,75 g/cm³ erhältlich durch Vermischen von
(a) Polyisocyanat,
(b) polymeren Verbindungen mit gegenüber Isocyanaten reaktiven Gruppen,
(c) Katalysatoren, enthaltend einbaubare Aminkatalysatoren, die neben der bzw. den gegenüber Isocyanaten reaktiven Gruppen eine oder mehrere tertiäte, aliphatische Aminogruppen aufweisen, wobei die mindestens eine tertiäre Aminogruppe zwei Reste, unabhängig voneinander ausgewählt aus Methyl- und Ethylrest, sowie einen weiteren organischen Rest trägt,
(d) Phosphorsäureester, Polyphosphate, Phosphonsäureester und/oder Phosphorigsäureester, wobei der Anteil der Komponente (d), bezogen auf das Gesamtgewicht der Komponenten (a) bis (f), kleiner als 3 Gew.-% ist,
(e) Treibmittel, enthaltend Wasser, und gegebenenfalls
(f) Kettenverlängerungs- und oder Vernetzungsmittel und
(g) Hilfsmittel und/oder Zusatzstoffe
zu einer Reaktionsmischung und man die Reaktionsmischung in eine Form gibt und in dieser zum Polyurethanintegralschaumstoff aushärtet, wobei das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25 beträgt,
wobei neben den einbaubare Aminkatalysatoren als Katalysatoren (c) alleine organische Metallkatalysatoren enthalten sein können,
der Phosphorsäureester der allgemeinen Formel
(R¹-O)₃-P=O
entspricht, wobei die drei Reste R¹ unabhängig voneinander für organische Reste stehen, die eine oder mehrere Phenylgruppen, eine oder mehrere Phosphorsäuregruppen (Polyalkylphosphat mit Ethylenoxyd) oder deren Ester und/oder ein oder mehrere Atome, ausgewählt aus der Gruppe, bestehend aus Stickstoff, Sauerstoff, Fluor, Chlor und Brom, enthalten,
das Polyphosphat der allgemeinen Formel
-[P(O)(O-R'⁺)-O]ₙ-
entspricht, wobei n für ganze Zahlen von 2 bis 10000 steht, R'⁺ für Alkalimetallkationen oder Ammoniumkationen steht
der Phosphonsäureester der allgemeinen Formel
(R³)(R²-O)₂-P=O
entspricht, wobei die Reste R² unabhängig voneinander für organische Reste stehen, die ein oder mehrere Atome, ausgewählt aus der Gruppe, bestehend aus Stickstoff, Sauerstoff, Fluor, Chlor und Brom, enthalten und der Rest R³ entweder für Wasserstoff oder aromatische, aliphatische oder cycloaliphatische Reste mit 1 bis 10 Kohlenstoffatomen steht,
der Phosphorigsäureester der allgemeinen Formel
(R⁴-O)₃-P
entspricht, wobei die Reste R⁴ unabhängig voneinander für organische Reste stehen, die ein oder mehrere Atome, ausgewählt aus der Gruppe, bestehend aus Stickstoff, Sauerstoff, Fluor, Chlor und Brom, enthalten.

2. Polyurethanintegralschaumstoffe nach Anspruch 1, **dadurch gekennzeichnet, dass** die Phosphorsäureester, Phosphonsäureester und/oder Phosphorigsäureester gegenüber Isocyanatgruppen reaktive Gruppen, vorzugsweise OH-Gruppen, enthalten.

3. Polyurethanintegralschaumstoffe nach Anspruch 1 oder 2, wobei Wasser als alleiniges als Treibmittel (e) eingesetzt wird.

4. Polyurethanintegralschaumstoffe nach einem der Ansprüche 1 bis 3, **dadurch gekennzeichnet, dass** die Komponente (d) Verbindungen mit mindestens zwei Phosphatgruppen im Molekül enthält.

5. Polyurethanschintegralaumstoffe nach einem der Ansprüche 1 bis 4, **dadurch gekennzeichnet, dass** der Polyurethanformschaumstoff eine mittlere Dichte von 150 bis 500 g/L aufweist.

6. Polyurethanintegralschaumstoffe nach einem der Ansprüche 1 bis 5, **dadurch gekennzeichnet, dass** der Polyurethanschaumstoff ein Automobilinnenraumteil ist.

7. Polyurethanintegralschaumstoffe nach Anspruch 6, **dadurch gekennzeichnet, dass** das Automobilinnenraumteil ein Lenkrad, ein Armaturenbrett, eine Türinnenverkleidung, eine Kopfstütze oder ein Schaltknauf ist.

8. Polyurethanintegralschaumstoffe nach einem der Ansprüche 1 bis 7, **dadurch gekennzeichnet, dass** diese keine weiteren Flammschutzmittel enthalten.

9. Verfahren zur Herstellung von Polyurethanintegralschaumstoffen mit einer Dichte von 0,15 bis 0,75 g/cm³ bei dem man
a) Polyisocyanat,
b) polymeren Verbindungen mit gegenüber Isocyanaten reaktiven Gruppen,
c) Katalysatoren, enthaltend einbaubare Aminkatalysatoren, die neben der bzw. den gegenüber Isocyanaten reaktiven Gruppen eine oder mehrere tertiäte, aliphatische Aminogruppen aufweisen, wobei die mindestens eine tertiäre Aminogruppe zwei Reste, unabhängig voneinander ausgewählt aus Methyl- und Ethylrest, sowie einen weiteren organischen Rest trägt,
d) Phosphorsäureester, Polyphosphate, Phosphonsäureester und/oder Phosphorigsäureester, wobei der Anteil der Komponente (d), bezogen auf das Gesamtgewicht der Komponenten (a) bis (f), kleiner als 3 Gew.-% ist,
e) Treibmittel, enthaltend Wasser, und gegebenenfalls
f) Kettenverlängerungs- und oder Vernetzungsmittel und
g) Hilfsmittel und/oder Zusatzstoffe
zu einer Reaktionsmischung vermischt und die Reaktionsmischung in eine Form gibt und in dieser zum Polyurethanintegralschaumstoff aushärtet, wobei das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25 beträgt und
wobei neben den einbaubaren Aminkatalysatoren als Katalysatoren (c) alleine organische Metallkatalysatoren enthalten sein können,
der Phosphorsäureester der allgemeinen Formel
(R¹-O)₃-P=O
entspricht, wobei die drei Reste R¹ unabhängig voneinander für organische Reste stehen, die eine oder mehrere Phenylgruppen, eine oder mehrere Phosphorsäuregruppen (Polyalkylphosphat mit Ethylenoxyd) oder deren Ester und/oder ein oder mehrere Atome, ausgewählt aus der Gruppe bestehend aus Stickstoff, Sauerstoff, Fluor, Chlor und Brom enthalten,
das Polyphosphat der allgemeinen Formel
-[P(O)(O-R'⁺)-O]ₙ-
entspricht, wobei n für ganze Zahlen von 2 bis 20 steht, R'⁺ für Alkalimetallkationen oder Ammoniumkationen steht
der Phosphonsäureester der allgemeinen Formel
(R³)(R²-O)₂-P=O
entspricht, wobei die Reste R² unabhängig voneinander für organische Reste stehen, die ein oder mehrere Atome, ausgewählt aus der Gruppe bestehend aus Stickstoff, Sauerstoff, Fluor, Chlor und Brom, enthalten und der Rest R³ entweder für Wasserstoff oder aromatische, aliphatische oder cycloaliphatische Reste mit 1 bis 10 Kohlenstoffatomen steht,
der Phosphorigsäureester der allgemeinen Formel
(R⁴-O)₃-P
entspricht, wobei die Reste R⁴ unabhängig voneinander für organische Reste stehen, die ein oder mehrere Atome, ausgewählt aus der Gruppe bestehend aus Stickstoff, Sauerstoff, Fluor, Chlor und Brom enthalten.

10. Verwendung eines Polyurethanintegralschaumstoffs nach einem der Ansprüche 1 bis 8 im Automobilinnenraum.

## Claims

1. An integral polyurethane foam with a density from 0.15 to 0.75 g/cm³, obtainable via mixing of
(a) polyisocyanate,
(b) polymeric compounds having groups reactive toward isocyanates,
(c) catalysts comprising incorporable amine catalysts which have, alongside the group(s) reactive toward isocyanates, one or more tertiary aliphatic amino groups, wherein the at least one tertiary amino group bears two moieties mutually independently selected from methyl moiety and ethyl moiety, and also bears another organic moiety,
(d) phosphoric esters, polyphosphates, phosphonic esters, and/or phosphorous esters, wherein the proportion of component (d), based on the total weight of components (a) to (f), is smaller than 3% by weight,
(e) blowing agents comprising water, and optionally
(f) chain extenders and/or crosslinking agents, and
(g) auxiliaries and/or additives
to give a reaction mixture, placing the reaction mixture into a mold and curing it therein to give the integral polyurethane foam, wherein the equivalence ratio of NCO groups of the polyisocyanates (a) to the entirety of the reactive hydrogen atoms of components (b), (c), and (d) is from 1 : 0.8 to 1 : 1.25,
where, besides the incorporable amine catalysts as catalysts (c), solely organic metal catalysts may be present,
the phosphoric ester has the general formula
(R²-O)₃-P=O,
where the three moieties R¹ are mutually independently organic moieties which comprise one or more phenyl groups, one or more phosphoric acid groups (polyalkyl phosphate with ethylene oxide) or esters of these and/or one or more atoms selected from the group consisting of nitrogen, oxygen, fluorine, chlorine, and bromine,
the polyphosphate has the general formula
- [P(O)(O-R'⁺)-O]ₙ-,
where n is integers from 2 to 10 000 and R'⁺ is alkali metal cations or ammonium cations,
the phosphonic ester has the general formula
(R³)(R²-O)₂P=O,
where the moieties R² are mutually independently organic moieties which comprise one or more atoms selected from the group consisting of nitrogen, oxygen, fluorine, chlorine, and bromine, and the moiety R³ is either hydrogen or aromatic, aliphatic, or cycloaliphatic moieties having from 1 to 10 carbon atoms,
the phosphorous ester has the general formula
(R⁴-O)₃-P,
where the moieties R⁴ are mutually independently organic moieties which comprise one or more atoms selected from the group consisting of nitrogen, oxygen, fluorine, chlorine, and bromine.

2. The integral polyurethane foam according to claim 1, wherein the phosphoric esters, phosphonic esters, and/or phosphorous esters comprise groups which are preferably OH groups and which are reactive toward isocyanate groups.

3. The integral polyurethane foam according to claim 1 or 2, wherein water on its own is used as blowing agent (e).

4. The integral polyurethane foam according to any of claims 1 to 3, wherein component (d) comprises compounds having at least two phosphate groups in the molecule.

5. The integral polyurethane foam according to any of claims 1 to 4, wherein the average density of the molded polyurethane foam is from 150 to 500 g/L.

6. The integral polyurethane foam according to any of claims 1 to 5, wherein the polyurethane foam is an automobile interior part.

7. The integral polyurethane foam according to claim 6, wherein the automobile interior part is a steering wheel, a dashboard, interior door cladding, a headrest, or a control button.

8. The integral polyurethane foam according to any of claims 1 to 7, which comprises no further flame retardants.

9. A process for producing integral polyurethane foams with a density from 0.15 to 0.75 g/cm³, by mixing
a) polyisocyanate,
b) polymeric compounds having groups reactive toward isocyanates,
c) catalysts comprising incorporable amine catalysts which have, alongside the group(s) reactive toward isocyanates, one or more tertiary aliphatic amino groups, wherein the at least one tertiary amino group bears two moieties mutually independently selected from methyl moiety and ethyl moiety, and also bears another organic moiety,
d) phosphoric esters, polyphosphates, phosphoric esters, and/or phosphorous esters, wherein the proportion of component (d), based on the total weight of components (a) to (f), is smaller than 3% by weight,
e) blowing agents comprising water, and optionally
f) chain extenders and/or crosslinking agents, and
g) auxiliaries and/or additives
to give a reaction mixture, placing the reaction mixture into a mold and curing it therein to give the integral polyurethane foam, wherein the equivalence ratio of NCO groups of the polyisocyanates (a) to the entirety of the reactive hydrogen atoms of components (b), (c), and (d) is from 1 : 0.8 to 1 : 1.25, and
where, besides the incorporable amine catalysts as catalysts (c), solely organic metal catalysts may be present,
the phosphoric ester has the general formula
(R¹-O)₃-P=O
where the three moieties R¹ are mutually independently organic moieties which comprise one or more phenyl groups, one or more phosphoric acid groups (polyalkyl phosphate with ethylene oxide) or esters of these and/or one or more atoms selected from the group consisting of nitrogen, oxygen, fluorine, chlorine, and bromine,
the polyphosphate has the general formula
- [P(O)(O⁻R'⁺)-O]ₙ-
where n is integers from 2 to 20 and R'⁺ is alkali metal cations or ammonium cations,
the phosphonic ester has the general formula
(R³)(R²-O)₂-P=O
where the moieties R² are mutually independently organic moieties which comprise one or more atoms selected from the group consisting of nitrogen, oxygen, fluorine, chlorine, and bromine, and the moiety R³ is either hydrogen or aromatic, aliphatic, or cycloaliphatic moieties having from 1 to 10 carbon atoms,
the phosphorous ester has the general formula
(R⁴-O)₃-P
where the moieties R⁴ are mutually independently organic moieties which comprise one or more atoms selected from the group consisting of nitrogen, oxygen, fluorine, chlorine, and bromine.

10. The use of an integral polyurethane foam according to any of claims 1 to 8 in automobile interiors.

## Revendications

1. Mousses de polyuréthane à peau intégrée dotées d'une densité de 0,15 à 0,75 g/cm³, pouvant être obtenues par mélange de
(a) un polyisocyanate,
(b) des composés polymères contenant des groupes réactifs avec les isocyanates,
(c) des catalyseurs, contenant des catalyseurs aminés insérables, qui comprennent en plus du ou des groupes réactifs avec les isocyanates un ou plusieurs groupes amino aliphatiques tertiaires, ledit au moins un groupe amino tertiaire portant deux radicaux, choisis indépendamment l'un de l'autre parmi un radical méthyle et un radical éthyle, ainsi qu'un autre radical organique,
(d) des esters de l'acide phosphorique, des polyphosphates, des esters de l'acide phosphonique et/ou des esters de l'acide phosphoreux, la proportion du composant (d), par rapport au poids total des composants (a) à (f), étant inférieure à 3 % en poids,
(e) des agents gonflants contenant de l'eau, et éventuellement
(f) des agents d'allongement de chaîne et/ou de réticulation et
(g) des adjuvants et/ou des additifs,
en un mélange réactionnel et on place le mélange réactionnel dans un moule et on durcit dans celui-ci pour donner la mousse de polyuréthane à peau intégrée, le rapport d'équivalence de groupes NCO des polyisocyanates (a) sur la somme des atomes d'hydrogène réactifs des composants (b), (c) et (d) étant de 1 : 0,8 à 1 : 1,25,
des catalyseurs métalliques organiques individuels pouvant être contenus en plus des catalyseurs aminés insérables en tant que catalyseurs (c),
les esters de l'acide phosphorique correspondant à la formule générale
(R¹-O)₃-P=O
dans laquelle les trois radicaux R¹ représentent indépendamment les uns des autres des radicaux organiques qui contiennent un ou plusieurs groupes phényle, un ou plusieurs groupes acide phosphorique (poly(phosphate d'alkyle) avec de l'oxyde d'éthylène) ou leurs esters et/ou un ou plusieurs atomes choisis dans le groupe constitué par azote, oxygène, fluor, chlore et brome,
le polyphosphate correspondant à la formule générale
- [P(O)(O-R'⁺)-O]ₙ-
dans laquelle n représente des nombres entiers de 2 à 10 000, R'⁺ représente des cations de métaux alcalins ou des cations ammonium,
les esters de l'acide phosphonique correspondant à la formule générale
(R³)(R²-O)₂-P=O
dans laquelle les radicaux R² représentent indépendamment les uns des autres des radicaux organiques qui contiennent un ou plusieurs atomes choisis dans le groupe constitué par azote, oxygène, fluor, chlore et brome, et le radical R³ représente soit l'hydrogène soit des radicaux aromatiques, aliphatiques ou cycloaliphatiques de 1 à 10 atomes de carbone,
les esters de l'acide phosphoreux correspondant à la formule générale
(R⁴-O)₃-P
dans laquelle les radicaux R⁴ représentent indépendamment les uns des autres des radicaux organiques qui contiennent un ou plusieurs atomes choisis dans le groupe constitué par azote, oxygène, fluor, chlore et brome.

2. Mousses de polyuréthane à peau intégrée selon la revendication 1, **caractérisées en ce que** les esters de l'acide phosphorique, les esters de l'acide phosphonique et/ou les esters de l'acide phosphoreux contiennent des groupes réactifs avec les groupes isocyanate, de préférence des groupes OH.

3. Mousses de polyuréthane à peau intégrée selon la revendication 1 ou 2, dans lesquelles l'eau seule est utilisée en tant qu'agent gonflant (e).

4. Mousses de polyuréthane à peau intégrée selon l'une quelconque des revendications 1 à 3, **caractérisées en ce que** le composant (d) contient des composés contenant au moins deux groupes phosphate par molécule.

5. Mousses de polyuréthane à peau intégrée selon l'une quelconque des revendications 1 à 4, **caractérisées en ce que** la mousse moulée de polyuréthane présente une densité moyenne de 150 à 500 g/l.

6. Mousses de polyuréthane à peau intégrée selon l'une quelconque des revendications 1 à 5, **caractérisées en ce que** la mousse de polyuréthane est une pièce d'habitacle d'automobile.

7. Mousses de polyuréthane à peau intégrée selon la revendication 6, **caractérisées en ce que** la pièce d'habitacle d'automobile est un volant, un tableau de bord, un habillage intérieur de porte, un appuie-tête ou un pommeau de levier de vitesse.

8. Mousses de polyuréthane à peau intégrée selon l'une quelconque des revendications 1 à 7, **caractérisées en ce que** celles-ci ne contiennent pas d'agents ignifuges supplémentaires.

9. Procédé de fabrication de mousses de polyuréthane à peau intégrée dotées d'une densité de 0,15 à 0,75 g/cm³, selon lequel on mélange
a) un polyisocyanate,
b) des composés polymères contenant des groupes réactifs avec les isocyanates,
c) des catalyseurs, contenant des catalyseurs aminés insérables, qui comprennent en plus du ou des groupes réactifs avec les isocyanates un ou plusieurs groupes amino aliphatiques tertiaires, ledit au moins un groupe amino tertiaire portant deux radicaux, choisis indépendamment l'un de l'autre parmi un radical méthyle et un radical éthyle, ainsi qu'un autre radical organique,
d) des esters de l'acide phosphorique, des polyphosphates, des esters de l'acide phosphonique et/ou des esters de l'acide phosphoreux, la proportion du composant (d), par rapport au poids total des composants (a) à (f), étant inférieure à 3 % en poids,
e) des agents gonflants contenant de l'eau, et éventuellement
f) des agents d'allongement de chaîne et/ou de réticulation, et
g) des adjuvants et/ou des additifs,
en un mélange réactionnel et on place le mélange réactionnel dans un moule et on durcit dans celui-ci pour donner une mousse de polyuréthane à peau intégrée, le rapport d'équivalence de groupes NCO des polyisocyanates (a) sur la somme des atomes d'hydrogène réactifs des composants (b), (c) et (d) étant de 1 : 0,8 à 1 : 1,25 et
des catalyseurs métalliques organiques individuels pouvant être contenus en plus des catalyseurs aminés insérables en tant que catalyseurs (c),
les esters de l'acide phosphorique correspondant à la formule générale
(R¹-O)₃-P=O
dans laquelle les trois radicaux R¹ représentent indépendamment les uns des autres des radicaux organiques qui contiennent un ou plusieurs groupes phényle, un ou plusieurs groupes acide phosphorique (poly(phosphate d'alkyle) avec oxyde d'éthylène) ou leurs esters et/ou un ou plusieurs atomes choisis dans le groupe constitué par azote, oxygène, fluor, chlore et brome,
le polyphosphate correspondant à la formule générale
- [P(O)(O-R'⁺)-O]ₙ-
dans laquelle n représente des nombres entiers de 2 à 20, R'⁺ représente des cations de métaux alcalins ou des cations ammonium,
les esters de l'acide phosphonique correspondant à la formule générale
(R³)(R²-O)₂-P=O
dans laquelle les radicaux R² représente indépendamment les uns des autres des radicaux organiques qui contiennent un ou plusieurs atomes choisis dans le groupe constitué par azote, oxygène, fluor, chlore et brome, et le radical R³ représente soit l'hydrogène soit des radicaux aromatiques, aliphatiques ou cycloaliphatiques de 1 à 10 atomes de carbone,
les esters de l'acide phosphoreux correspondant à la formule générale
(R⁴-O)₃-P
dans laquelle les radicaux R⁴ représentent indépendamment les uns des autres des radicaux organiques qui contiennent un ou plusieurs atomes choisis dans le groupe constitué par azote, oxygène, fluor, chlore et brome.

10. Utilisation d'une mousse de polyuréthane à peau intégrée selon l'une quelconque des revendications 1 à 8 dans l'habitacle d'automobiles.
